# EUROPÄISCHE PATENTANMELDUNG

(11) **EP 2 345 336 A1**
(43) Veröffentlichungstag der Anmeldung: **20.07.2011**
(21) Anmeldenummer: 10000356.5
(22) Anmeldetag: 15.01.2010
(51) Int. Cl.: A23L 1/275, A23L 2/58

(54) **Farbstoffzusammensetzung**

(71) Anmelder: RUDOLF WILD GmbH & CO. KG, 69214 Eppelheim (DE)
(72) Erfinder: Christiansen, Christian, 13599 Berlin (DE); Fuchs, Katarina, 14471 Potsdam (DE)
(74) Vertreter: Grünecker, Kinkeldey, Stockmair & Schwanhäusser Anwaltssozietät

(57) **Zusammenfassung**

Die vorliegende Erfindung betrifft eine Zusammensetzung, umfassend:
(a) mindestens einen Farbstoff,
(b) mindestens einen ersten Emulgator, ausgewählt aus der Gruppe der Polysorbate und
(c) mindestens einen zweiten Emulgator, ausgewählt aus der Gruppe der Ester von Mono- und Diglyceriden von Speisefettsäuren,

wobei das Gewichtsverhältnis (b) : (c) 5 : 1 bis 40 : 1 beträgt.

## Beschreibung

Die vorliegende Erfindung betrifft eine Farbstoffzusammensetzung, die zur Herstellung von Lebensmitteln und Halbfertigerzeugnissen für Lebensmittel geeignet ist.

Es besteht ein großes Interesse daran, Lebensmittel nicht nur geschmacklich sondern auch optisch ansprechend anzubieten. Die Farbe des Lebensmittels stellt in diesem Zusammenhang für den Konsumenten ein wichtiges Auswahlkriterium dar. Lebensmittel, die von Natur aus wenig eigene Farbe besitzen, werden deshalb oft mit Farbstoffen versetzt, um sie für den Konsumenten ansprechend zu gestalten. Weiterhin können Farbstoffe dazu dienen, dass die bei der Herstellung, Verarbeitung oder Lagerung auftretenden Farbveränderungen oder -verluste ausgeglichen werden. Somit ist eine gleichbleibende optische Qualität des Produkts gewährleistet.

Hinsichtlich der für Lebensmittel üblicherweise verwendeten Farbstoffe kann zwischen synthetischen und natürlichen Farbstoffen unterschieden werden. Zu den wichtigsten synthetischen Lebensmittelfarbstoffen gehören Gelborange S (E110), Chinolingelb (E104), Azorubin (E122), Allurarot (E129), Tartrazin (E102) und Cochenillerot A (E124). Allerdings stehen diese Farbstoffe unter Verdacht, Aufmerksamkeitsdefizit-Hyperaktivitätsstörungen (ADHS) bei Kindern auszulösen. Des weiteren können diese Farbstoffe Allergien und allergieähnlichen Symptome auslösen. Nicht zuletzt stehen die Azofarbstoffe unter ihnen immer noch im Verdacht krebserregend zu sein, weil bei der Verstoffwechslung im Körper kanzerogene Arylaminkomponenten freigesetzt werden können. Vor dem Hintergrund dieser Gesundheitsrisiken, der immer strenger werdenden Lebensmittelvorschriften und des zunehmenden Gesundheitsbewusstseins der Konsumenten geht der Trend immer mehr dahin, natürliche Farbstoffe, wie β-Carotin (E160a), Capsanthin (E160c), Lycopin (E160d) und Lutein (E161b), zu verwenden.

Da diese natürlichen Farbstoffe fettlöslich sind, ist eine Formulierung mit Emulgatoren notwendig, um die Löslichkeit in wasser-basierten Lebensmitteln zu ermöglichen. Insbesondere bei Getränken ist es zudem notwendig, Formulierungen bereitzustellen, die bei niedrigen pH-Werten stabil sind und dauerhaft eine gleichmäßige Verteilung des Farbstoffs in dem sauren, wässrigen Medium gewährleisten.

Die WO 2007/047237 betrifft Emulgatorkombinationen zur Herstellung von Mikroemulsionen, um wasserunlösliche Komponenten in Lebensmittel oder Getränke einzuarbeiten. Dabei werden Mischungen von Emulgatoren mit niedrigen HLB-Werten von 1 bis 5, mittleren HLB-Werten von 6 bis 8 und hohen HLB-Werten von 9 bis 17 verwendet. Allerdings weisen Lebensmittel, die diese Mikroemulsionen enthalten, einen unangenehmen Beigeschmack auf, der auf die verwendeten Emulgatoren zurückzuführen ist.

Die WO 2004/023900 betrifft Formulierungen von wasserunlöslichen Feststoffen in Getränken. Darin werden Emulgatorkombinationen aus Polysorbaten und Sorbitanestern beschrieben. Die wasserunlöslichen Feststoffe werden zuerst in einem nicht-wässrigen Lösungsmittel gelöst und durch Zugabe von Emulgatoren in ein Getränkekonzentrat umgearbeitet, das in ein klares Getränk rückverdünnt werden kann. Die Verwendung von Lösungsmitteln, wie Propylenglykol, Ethanol und Benzylalkohol sind jedoch mengen- und anwendungsbeschränkt und für die Formulierung von hochfarbhaltigen Emulsionen ungeeignet.

In der US 6509044 werden Zusammensetzungen zur Herstellung von optisch klaren Produkten offenbart. Die lipophilen Bestandteile der Zusammensetzung werden nach Lösen in einem geeigneten Öl unter Verwendung von Emulgatoren mit HLB-Werten von 10 bis 18 emulgiert. Insbesondere Mischungen aus Polysorbat 60 und Sucrosestearat und Mischungen aus Polysorbat 60, Sucrosestearat und Polyglycerinester einer Fettsäure werden beschrieben, da Polysorbat 60, den am wenigsten störenden Beigeschmack aufweist. Die Zusammensetzungen enthalten jedoch nur sehr geringe Mengen an Farbstoff (maximal 0,15 % β-Carotin) und nur sehr wenig Ölphase (maximal 0,3 %), so dass sich Oleoresine mit einem höheren Gehalt an Ölphase nicht stabil emulgieren lassen.

Aufgabe der vorliegenden Erfindung ist es, eine Zusammensetzung zur Verfügung zu stellen, die gute Färbeeigenschaften aufweist, mikrobiell und physikalisch stabil, homogen und fließfähig ist, in sauren Getränken bei Stehenlassen bei Raumtemperatur über einen längeren Zeitraum nicht ausflockt oder aufrahmt und geschmacksneutral ist.

Diese Aufgabe wird durch eine Zusammensetzung gelöst, die (a) mindestens einen Farbstoff, (b) mindestens einen ersten Emulgator, ausgewählt aus der Gruppe der Polysorbate, und (c) mindestens einen zweiten Emulgator, ausgewählt aus der Gruppe der Ester von Mono- und Diglyceriden von Speisefettsäuren, umfasst, wobei das Gewichtsverhältnis (b) zu (c) 5 : 1 bis 40 : 1 beträgt.

Die Aufgabe wird auch durch ein Verfahren zur Herstellung der erfindungsgemäßen Zusammensetzung gelöst, das dadurch gekennzeichnet ist, dass die Komponenten miteinander vermischt werden.

Die Aufgabe wird auch durch die Verwendung der erfindungsgemäßen Zusammensetzung zur Herstellung von Lebensmitteln und Halbfertigerzeugnissen von Lebensmitteln gelöst.

Bevorzugte Ausführungsformen sind in den Unteransprüchen 2 bis 11 und 14 beschrieben.

Wird die erfindungsgemäße Zusammensetzung in einem Getränk verwendet, so wird ein klares Getränk erhalten.

Erfindungsgemäß wird unter dem Begriff "klar" eine Flüssigkeit verstanden, die keine Trübung aufweist. Üblicherweise wird eine Trübung durch kleine Partikel verursacht, die einen vom Trägerstoff abweichenden Brechungsindex besitzen und Licht streuuen. Erfindungsgemäß wird die Trübung in Flüssigkeiten in FNU (Formazine Nephelometric Unit) angegeben. Die Messung der Trübung erfolgt mit einem Hach Lange Nephelometer Nephla (Messverfahren: 90° Streulichtphotometrie, Messmethode: DIN EN 27027 bzw. ISO 7027, Messwellenlänge: 860 nm, Messbereich: FNU 0,001 bis 1000). Üblicherweise wird eine Lösung mit einem FNU-Wert von kleiner 20 FNU als klar bezeichnet. Die Begriffe "klar", "blank" und "transparent" werden identisch verwendet und sind daher austauschbar.

Unter "stabil" wird erfindungsgemäß verstanden, dass die erfindungsgemäße Zusammensetzung über einen Zeitraum von 1 Jahr bei Kühllagerung bei <10 °C nicht die Eigenschaften ändert, z.B. eine erhöhte Trübung bei der Färbung von Getränken aufweist.

Erfindungsgemäß wird unter dem Begriff "homogen" verstanden, dass die erfindungsgemäße Zusammensetzung makroskopisch einheitlich ist.

Der Begriff "fließfähig" bedeutet, dass die erfindungsgemäße Zusammensetzung im industriellen Maßstab mit herkömmlichen (Verdränger-)pumpen über Leitungssysteme befördert werden kann.

Erfindungsgemäß wird unter dem Begriff "geschmacksneutral" verstanden, dass die erfindungsgemäße Zusammensetzung den Geschmack des Lebensmittels, zu dessen Herstellung sie verwendet wird, nicht verändert.

Als Farbstoffe können alle üblichen, dem Fachmann bekannten Farbstoffe verwendet werden. Vorzugsweise können erfindungsgemäß Carotinoide, wie α-, β-, γ-Carotin, Bixin, Norbixin, Annatto, Capsanthin, Capsorubin, Paprika-Oleoresin, Lycopin, β-Apo-8-carotinal und β-Apo-8-carotinsäureethylester (E160a bis f), Xanthophylle, wie Flavoxanthin, Lutein, Kryptoxanthin, Rubixanthin, Violaxanthin, Rhodoxanthin und Canthaxantin (E161a bis g), Luteinester, Luteinoleoresin, Mg-Chlorophyll (E140), Cu-Chlorophyll und Cu-Chlorophyllin (E141), chlorophyllhaltige und Cu-chlorophyllhaltige Oleoresine, Carminsäure (E 120), Curcumin (E100) sowie Kombinationen daraus verwendet werden. Besonders bevorzugte Farbstoffe sind β-Carotin, Paprika-Oleoresin, Cu-Chlorophyllin, insbesondere β-Carotin und Paprika-Oleoresin.

Paprika-Oleoresin ist ein öllöslicher Extrakt aus Paprika und enthält als Hauptfärbebestandteile Capsanthin, Capsorubin und β-Carotin. Chlorophyllhaltige Oleoresine werden aus Blättern der Brennnessel, des Spinats, der Lucerne und/oder des Maulbeerbaums gewonnen.

Als erster Emulgator wird erfindungsgemäß ein Polysorbat, d. h. ein Polyoxyethylen(20)sorbitan, das mit Fettsäuren verestert ist, verwendet. Dabei gibt die Nummer, die dem Begriff "Polysorbat" folgt die jeweilige Fettsäure an. So entspricht Polysorbat 20 Poly-oxyethylen(20)sorbitan-monolaurat (E432), Polysorbat 40 entspricht Polyoxyethylen-(20)sorbitanmonopalmitat (E434), Polysorbat 60 entspricht Polyoxyethylen(20)sorbitan-monostearat (E435), Polysorbat 65 entspricht Polyoxyethylen(20)tristearat (E436), Polysorbat 80 entspricht Polyoxyethylen(20)sorbitanmonooleat (E433) und Polysorbat 85 entspricht Polyoxyethylen(20)sorbitantrioleat

Als zweiter Emulgator wird ein Ester von Mono- und Diglyceriden von Speisefettsäuren, wie Essigsäureester aus Mono- und Diglyceriden von Speisefettsäuren (E472a), Milchsäureester aus Mono- und Diglyceriden von Speisefettsäuren (E472b), Zitronensäureester aus Mono- und Diglyceriden von Speisefettsäuren (E472c), Weinsäureester aus Mono- und Diglyceriden von Speisefettsäuren (472d), Diacetylweinsäureester von Mono- und Diglyceriden von Speisefettsäuren (E472e) und ein Gemisch aus Essig- und Weinsäureestern von Mono- und Diglyceriden von Speisefettsäuren (E472f), in der erfindungsgemäßen Zusammensetzung verwendet.

Die erfindungsgemäße Zusammensetzung lässt sich getränkestabil formulieren und ist insbesondere in einem Getränk mit einem pH-Wert von 4 oder niedriger stabil.

In einer bevorzugten Ausführungsform in Verbindung mit einer der oben oder unten genannten Ausführungsformen ist der erste Emulgator (b) aus der Gruppe, bestehend aus Polysorbat 20, Polysorbat 60 und Polysorbat 80, ausgewählt. Besonders bevorzugt ist der Emulgator ausgewählt aus Polysorbat 60 und Polysorbat 80, insbesondere Polysorbat 60.

In einer weiteren bevorzugten Ausführungsform in Verbindung mit einer der oben oder unten genannten Ausführungsformen ist der zweite Emulgator (c) aus der Gruppe, bestehend aus einem Milchsäure-, Zitronensäure- und Weinsäureester von Mono- und Diglyceriden von Speisefettsäuren, ausgewählt. Bevorzugt ist der Emulgator ein Milchsäure- oder Zitronensäureester von Mono- und Diglyceriden von Speisefettsäuren, insbesondere ein Zitronensäureester von Mono- und Diglyceriden von Speisefettsäuren.

Weiterhin kann die erfindungsgemäße Zusammensetzung in einer bevorzugten Ausführungsform in Verbindung mit einer der oben oder unten genannten Ausführungsformen als weitere Zusatzstoffe (d) Säuerungsmittel, wie Zitronensäure oder Tri-Natrium-Citrat, Geschmacksstoffe, Aromastoffe, Konservierungsstoffe, wie Kaliumsorbat, Fruchtkonzentrate, Frucht- und Pflanzenextrakte, Vitamine, wie Vitamin C, Süßungsmittel, Antioxidationsmittel, wie Tocopherol, sowie Kombinationen aus zwei oder mehr Zusatzstoffen enthalten. Bevorzugte Zusatzstoffe sind Antioxidationsmittel, Konservierungsstoffe, Vitamine, Fruchtkonzentrate, Frucht- und Pflanzenextrakte, besonders bevorzugt sind Antioxidationsmittel und Konservierungsstoffe.

In einer weiteren bevorzugten Ausführungsform in Verbindung mit einer der oben oder unten genannten Ausführungsformen kann die erfindungsgemäße Zusammensetzung natürliche und/oder künstliche Süßungsmittel enthalten. Übliche natürliche Süßungsmittel sind z.B. Kohlenhydrate, wie Zucker, Invertzuckersirup, Glucosesirup oder Fructosesirup, Fruchtsüße, Honig und Agavendicksaft, natürliche Süßstoffe, wie Stevia, Rebaudiosid A, Taumatin oder Neohesperidin, und Zuckeralkohole, wie Sorbit, Maltit, Manit, Isomalt, Maltitol-Sirup, Xylit oder Lactit. Übliche künstliche Süßungsstoffe sind z.B. Aspartam, Acesulfam, Natrium-Cyclamat, Natrium-Saccharin oder Sukralose. Die Süßungsmittel können einzeln oder in Kombination aus zwei oder mehreren Süßungsmitteln eingesetzt werden. Besonders bevorzugt enthält die erfindungsgemäße Zusammensetzung Zucker, Invertzuckersirup und Sorbit als Süßungsmittel.

In Verbindung mit einer der oben oder unten genannten Ausführungsformen enthält die erfindungsgemäße Zusammensetzung vorzugsweise 1 bis 20 Gew.-%, besonders bevorzugt 2 bis 16 Gew.-%, insbesondere 4 bis 10 Gew.-% der Komponente (a), bezogen auf die Gesamtzusammensetzung.

Weiterhin enthält die erfindungsgemäße Zusammensetzung in Verbindung mit einer der oben oder unten genannten Ausführung bevorzugt 5 bis 80 Gew.-%, besonders bevorzugt 15 bis 40 Gew.-%, insbesondere 20 bis 25 Gew.-% der Komponente (b), bezogen auf die Gesamtzusammensetzung. Enthält die erfindungsgemäße Zusammensetzung 5 bis 80 Gew.-% der Komponente (b), ist sie besonders stabil und fließfähig.

In einer weiteren bevorzugten Ausführungsform in Verbindung mit einer der oben oder unten genannten Ausführungsformen enthält die erfindungsgemäße Zusammensetzung vorzugsweise 1 bis 5 Gew.-%, insbesondere 1,5 bis 3 Gew.-% der Komponente (c), bezogen auf die Gesamtzusammensetzung.

In einer bevorzugten Ausführungsform in Verbindung mit einer der oben oder unten genannten Ausführungsform beträgt das Gewichtsverhältnis der Komponente (b) zu der Komponente (c) 5 : 1 bis 30 : 1, besonders bevorzugt 7 : 1 bis 17 : 1.

In einer bevorzugten Ausführungsform in Verbindung mit einer der oben oder unten genannten Ausführungsform beträgt das Gewichtsverhältnis der Komponente (a) zu der Komponente (b) 1 : 0,5 bis 1 : 10, besonders bevorzugt 1 : 5 bis 1 : 6,5.

In einer weiteren Ausführungsform in Verbindung mit einer der oben oder unten genannten Ausführungsformen enthält die erfindungsgemäße Zusammensetzung 1 bis 10 Gew.-%, besonders bevorzugt 2 bis 8 Gew.-%, insbesondere 4 bis 7 Gew.-% als Summe der Komponente (d), bezogen auf die Gesamtzusammensetzung.

Die erfindungsgemäße Zusammensetzung kann in Wasser gelöst werden, um eine wässrige Farbstofflösung zu erhalten. Vorzugsweise enthält die wässrige Farbstofflösung der erfindungsgemäßen Zusammensetzung mindestens 10 Gew.-% Wasser, besonders bevorzugt 30 Gew.-% bis 80 Gew.-%, insbesondere 60 bis 70 Gew.-% Wasser bezogen auf die Gesamtlösung.

In dem erfindungsgemäßen Verfahren werden die Komponenten (a) bis (c) und, sofern öllöslich, auch Komponente (d) in der dem Fachmann bekannten Weise unter Rühren vermischt. Vorzugsweise wird die Komponente (b) vorgelegt, auf 60 °C erwärmt, mit Komponente (a) und ggf. der öllöslichen Komponente (d) verrührt und dann Komponente (c) zugegeben und bei 60 bis 100 °C, besonders bevorzugt bei 60 bis 90 °C, insbesondere bei 80 °C aufgelöst.

Handelt es sich bei der Komponente (d) um eine wasserlösliche Komponente, so wird diese separat in einem zweiten Ansatz in Wasser gelöst und in den ersten Ansatz eingetragen. Vorzugsweise wird die Komponente (d) bei 40 bis 60 °C in Wasser gelöst und dann bei einer Temperatur von 60 °C langsam, unter Rühren in den ersten Ansatz eingetragen.

In einer bevorzugten Ausführungsform in Verbindung mit einer der oben oder unten genannten Ausführungsformen, wird die erfindungsgemäße Zusammensetzung zusätzlich einer Homogenisierung bei 60 bis 80 °C und 200 bis 1000 bar unterworfen.

Die erfindungsgemäße Zusammensetzung wird zur Herstellung von Lebensmitteln verwendet. Bevorzugt wird die erfindungsgemäße Zusammensetzung zur Herstellung von gefärbten Getränken, Fruchtzubereitungen und Süßwaren verwendet.

Vorzugsweise enthält ein Getränk 0,05 bis 0,3 Gew.-%, besonders bevorzugt 0,1 bis 0,2 Gew.-% der erfindungsgemäßen Zusammensetzung.

Getränke, die die erfindungsgemäße Zusammensetzung enthalten, weisen in einer bevorzugten Ausführungsform in Verbindung mit einer der oben oder unten genannten Ausführungsformen eine Trübung von 0 bis 20 FNU auf, besonders bevorzugt unter 10 FNU. Enthält ein Getränk, das mit der erfindungsgemäßen Zusammensetzung gefärbt ist, 5 ppm Carotinoide (als β-Carotin), so weist das Getränk eine Trübung kleiner 10 FNU auf.

Die vorliegende Erfindung wird durch die folgenden Beispiele näher erläutert.

### Beispiele

### Beispiel 1

| | Anteil Gew.-% |
|---|---|
| Polysorbat 60 | 25 |
| Tocopherol | 0,5 |
| Paprika-Oleoresin | 4 |
| Zitronensäureester von Mono- und Diglyceriden von Speisefettsäuren (E 472c) | 2 |
| Wasser | 64 |
| Vitamin C | 4 |
| Kaliumsorbat | 0,5 |

### Beispiel 2

| | Anteil Gew.-% |
|---|---|
| Polysorbat 60 | 20 |
| Tocopherol | 0,5 |
| Paprika-Oleoresin | 4 |
| Zitronensäureester von Mono- und Diglyceriden von Speisefettsäuren (E 472c) | 2 |
| Wasser | 69 |
| Vitamin C | 4 |
| Kaliumsorbat | 0,5 |

Zunächst werden Emulgator, Tocopherol, und Paprika-Oleoresin bei 80 °C 20 min mit einem Magnetrührer gerührt, bis das Oleoresin vollständig gelöst ist. In einem separaten Gefäß wird das Wasser vorgelegt und Vitamin C und Kaliumsorbat zugegeben und bei 50 °C gerührt, bis die Feststoffe vollständig gelöst sind. Die wässrige Lösung wird zu dem Emulgatorgemisch gegeben und 10 min gerührt. Anschließend wird die erhaltene Lösung bei 80 °C und 1000 bar homogenisiert.

Die erhaltene Lösung wird im Gewichtsverhältnis 1 : 1000 mit Limonadenmedium (bestehend aus 140 g Inverzucker, 5 g 50%iger Zitronensäure in Wasser, 854 g demineralisiertem Wasser und 0,2 g Kaliumsorbat) verdünnt, in Glasflaschen gefüllt und 2 Monate bei 20 °C beobachtet. Es bilden sich keine Flocken oder Ölringe im Flaschenhals.

Wird nur Zitronensäureester von Mono- und Diglyceriden von Speisefettsäuren als Emulgator verwendet, ist die erhaltene Zusammensetzung in dem Limonadenmedium nicht langzeitstabil über einen längeren Zeitraum, sondern flockt beim Stehenlassen bei 20 °C nach etwa 3 Wochen aus. Wird nur Polysorbat 60 als Emulgator verwendet, wird die Lösung, bestehend aus der Zusammensetzung und dem Limonadenmedium, makroskopisch inhomogen.

## Patentansprüche

1. Zusammensetzung, umfassend:
(a) mindestens einen Farbstoff,
(b) mindestens einen ersten Emulgator, ausgewählt aus der Gruppe der Polysorbate, und
(c) mindestens einen zweiten Emulgator, ausgewählt aus der Gruppe der Ester von Mono- und Diglyceriden von Speisefettsäuren,
wobei das Gewichtsverhältnis (b) : (c) 5 : 1 bis 40 : 1 beträgt.

2. Zusammensetzung nach Anspruch 1, wobei der Farbstoff (a) aus der Gruppe, bestehend aus α-, β-, γ-Carotin, Bixin, Norbixin, Annatto, Capsanthin, Capsorubin, Paprika-Oleoresin, Lycopin, β-Apo-8-carotinal, β-Apo-8-carotinsäureethylester, Flavoxanthin, Lutein, Kryptoxanthin, Rubixanthin, Violaxanthin, Rhodoxanthin, Canthaxantin, Luteinester, Luteinoleoresin, Mg-Chlorophyll, Cu-Chlorophyll, Cu-Chlorophyllin, chlorophyllhaltige Oleoresine, Carminsäure und Curcumin, ausgewählt ist.

3. Zusammensetzung nach Anspruch 1 oder 2, wobei der Emulgator (b) aus Polysorbat 20, Polysorbat 60 und Polysorbat 80 ausgewählt ist.

4. Zusammensetzung nach mindestens einem der Ansprüche 1 bis 3, wobei der Emulgator (c) aus der Gruppe, bestehend aus einem Milchsäure-, Zitronensäure- und Weinsäureester von Mono- und Diglyceriden von Speisefettsäuren, ausgewählt ist.

5. Zusammensetzung nach mindestens einem der Ansprüche 1 bis 4, welche weiterhin einen Zusatzstoff (d), ausgewählt aus der Gruppe, bestehend aus Geschmackstoffen, Aromastoffen, Säuerungsmitteln, Konservierungsstoffen, Süßungsmitteln, Fruchtkonzentraten, Frucht- und Pflanzenextrakten, Vitaminen und/oder Antioxidationsmitteln, umfasst.

6. Zusammensetzung nach mindestens einem der Ansprüche 1 bis 5, welche 1 bis 20 Gew.-%, bezogen auf die Gesamtzusammensetzung, der Komponente (a) enthält.

7. Zusammensetzung nach mindestens einem der Ansprüche 1 bis 6, welche 5 bis 80 Gew.-%, bezogen auf die Gesamtzusammensetzung, der Komponente (b) enthält.

8. Zusammensetzung nach mindestens einem der Ansprüche 1 bis 7, welche 1 bis 5 Gew.-%, bezogen auf die Gesamtzusammensetzung, der Komponente (c) enthält.

9. Zusammensetzung nach mindestens einem der Ansprüche 5 bis 8, welche 1 bis 10 Gew.-%, bezogen auf die Gesamtzusammensetzung, der Komponente (d) enthält.

10. Zusammensetzung nach mindestens einem der Ansprüche 1 bis 9, wobei die Komponente (b) Polysorbat 60 und die Komponente (c) ein Zitronensäureester von Mono- und Diglyceriden von Speisefettsäuren ist.

11. Zusammensetzung nach mindestens einem der Ansprüche 1 bis 10, wobei die Komponente (a) ein Paprika-Oleoresin ist.

12. Verfahren zur Herstellung einer Zusammensetzung nach mindestens einem der Ansprüche 1 bis 11, wobei die Komponenten (a) bis (c) und gegebenenfalls (d) miteinander vermischt werden.

13. Verwendung einer Zusammensetzung nach mindestens einem der Ansprüche 1 bis 11 zur Herstellung von Lebensmitteln und Halbfertigerzeugnissen für Lebensmittel.

14. Verwendung nach Anspruch 13 zur Herstellung von gefärbten Getränken, Fruchtzubereitungen und Süßwaren.
